# EUROPÄISCHE PATENTSCHRIFT

(11) **EP 1 961 069 B1**
(45) Veröffentlichungstag und Bekanntmachung des Hinweises auf die Patenterteilung: **18.11.2009**
(21) Anmeldenummer: 06818801.0
(22) Anmeldetag: 24.11.2006
(51) Int. Cl.: H01M 10/48

(54) **NIVEAUWÄCHTERSYSTEM**
LEVEL MONITORING SYSTEM
SYSTÈME DE SURVEILLANCE DE NIVEAU

(30) Priorität: 08.12.2005 DE 202005019220 U
(43) Veröffentlichungstag der Anmeldung: 27.08.2008
(73) Patentinhaber: HOPPECKE Batterien GmbH & Co. KG, 59929 Brilon (DE)
(72) Erfinder: KESPER, Heinrich, 34508 Willingen (DE)
(74) Vertreter: Rausch, Michael
(86) Internationale Anmeldenummer: PCT/EP2006/011282
(87) Internationale Veröffentlichungsnummer: WO 2007/065568

(56) Entgegenhaltungen:
- JP-A- 1 194 801
- JP-A- 9 055 233
- JP-A- 60 037 679
- US-A- 4 981 764

## Beschreibung

Die vorliegende Erfindung bezieht sich auf ein Niveauwächtersystem zur Überwachung eines Füllstandes eines Elektrolyten eines Akkumulators, das einen Niveauwächter und eine in einem separaten Gehäuse angeordnete Signalausgabeeinrichtung aufweist, die vom Niveauwächter den Füllstand des Elektrolyten repräsentierende Signale empfängt und zumindest ein entsprechendes Füllstandssignal ausgibt.

Akkumulatoren sind im Stand der Technik als elektrische Energiespeicher weit verbreitet. Mit der Zeit wird der Elektrolyt eines Akkumulators durch wiederkehrende Auf- und Entladezyklen nach und nach zersetzt, wodurch Wasserstoff und Sauerstoff in Form von Gas dem Elektrolyt entweichen. Um die ordnungsgemäße Funktion des Akkumulators sicher zu stellen und eine Beschädigung desselben zu verhindern, müssen diese entwichenen Gase in Form von gereinigtem Wasser nachgefüllt werden. Um den richtigen Nachfüllzeitpunkt zu ermitteln, kann der Füllstand des Elektrolyten überwacht werden. Unterschreitet dieser einen vorbestimmten Grenzwert, so muss gereinigtes Wasser nachgefüllt werden, um eine Beschädigung des Akkumulators zu verhindern.

Zur Überwachung des Füllstandes sind verschiedene Verfahren und Vorrichtungen bekannt.

Beispielsweise können sogenannte Schwimmer verwendet werden, die in Abhängigkeit des Füllstandes des Elektrolyten über ein entsprechendes Hebelwerk oder dergleichen eine optische Anzeige beeinflussen, die unmittelbar am Akkumulator befestigt ist. Nachteilig hieran ist, dass solche optische Anzeigen häufig schlecht abzulesen sind, insbesondere dann, wenn der Akkumulator und somit die Füllstandsanzeige an für das Wartungspersonal schlecht einzusehenden Stellen positioniert ist.

Ferner sind elektronische Niveauwächter bekannt, die den Füllstand beispielsweise mittels einer in den Elektrolyten eintauchenden Sensorelektrode erfassen. Über einen selbstleuchtenden Signalgeber, beispielsweise eine Leuchtdiode, der außen am Akkumulatorgehäuse angeordnet ist, wird dem Wartungspersonal angezeigt, ob dem Elektrolyten gereinigtes Wasser zugegeben werden muss. Ein selbstleuchtender Signalgeber hat den Vorteil, dass dieser meist sowohl aus der Distanz als auch im Dunkeln für das Wartungspersonal besser erkennbar ist. Ist der Akkumulator jedoch an Stellen positioniert, die für das Wartungspersonal schlecht einzusehen sind, so ist auch ein solcher selbstleuchtender Signalgeber entsprechend schlecht ablesbar.

Ein gattungsgemäßes Niveauwächtersystem ist aus der US 4,981,764 bekannt geworden. Bei dem hier beschriebenen Niveauwächtersystem kommt eine Signalausgabeeinrichtung zum Einsatz, die über eine in einer Hülse angeordnete LED verfügt. Die Hülse trägt ein Außengewinde, was es ermöglicht, diese mittels einer Mutter an einem Anzeigepaneel zu befestigen. Mittels der so zentral angeordneten Signalausgabeeinrichtung können eine Mehrzahl von miteinander verschalteten Akkumulatoren überwacht werden.

Es ist eine Aufgabe der vorliegenden Erfindung, ein verbessertes Niveauwächtersystem zur Überwachung eines Füllstandes eines Elektrolyten eines Akkumulators zu schaffen.

Diese Aufgabe wird gemäß der vorliegenden Erfindung durch ein Niveauwächtersystem nach Anspruch 1 gelöst. Die anhängigen Ansprüche beziehen sich auf individuelle Ausgestaltungen der vorliegenden Erfindung.

Das erfindungsgemäße Niveauwächtersystem zur Überwachung eines Füllstandes eines Akkumulatorelektrolyten umfasst einen Niveauwächter und eine Signalausgabeeinrichtung, die vom Niveauwächter den Füllstand des Elektrolyten repräsentierende Signale empfängt und zumindest ein entsprechendes Signal ausgibt. Erfindungsgemäß umfasst die Signalausgabeeinrichtung ein separates Gehäuse. Während der Niveauwächter im Gebrauchszustand am Akkumulator positioniert wird, kann die Signalausgabeeinrichtung entsprechend an einer von dem Niveauwächter entfernten Position vorgesehen werden. Ist beispielsweise ein Akkumulator, dessen Elektrolytflüssigkeitsstand mit Hilfe des erfindungsgemäßen Niveauwächtersystems überwacht wird, an einem für das Wartungspersonal schlecht einsehbaren Ort vorgesehen, so kann die Signalausgabeeinrichtung des erfindungsgemäßen Niveauwächtersystems getrennt von dem Akkumulator an einer besser einsehbaren Stelle positioniert werden, so dass der Füllstand des Elektrolyten problemlos für das Wartungspersonal ablesbar ist.

Als Niveauwächter kann grundsätzlich jeder bekannte Niveauwächter verwendet werden, der dazu geeignet ist, ein elektrisches Ausgangssignal zu liefern, das den Füllstand des Elektrolyten repräsentiert. Dabei kann der Füllstand durch den Niveauwächter entweder genau erfasst werden, beispielsweise in Volumeneinheiten, oder es kann detektiert werden, ob der Füllstand einen vorbestimmten Grenzwert unterschritten hat.

Das Ausgangssignal des Niveauwächters wird an die Signalausgabeeinrichtung weitergeleitet, was beispielsweise über eine Kabelverbindung, eine Funkverbindung oder dergleichen erfolgen kann.

Die Signalausgabeeinrichtung wiederum kann optische und/oder akustische Signale ausgeben, die den Füllstand des Elektrolyten repräsentieren und dem Wartungspersonal anzeigen, ob der Elektrolyt nachgefüllt werden muss oder nicht. Zur optischen Signalausgabe kann die Signalausgabeeinrichtung beispielsweise eine oder mehrere Leuchtdioden umfassen. Wird nur eine Leuchtdiode verwendet, so leuchtet diese bevorzugtbeispielsweise ständig, wenn ausreichend Elektrolyt im Akkumulator vorhanden ist. Unterschreitet hingegen der Elektrolytfüllstand den vorgegebenen Grenzwert, so beginnt die Leuchtdiode zu blinken, um das Wartungspersonal darauf aufmerksam zu machen, den Elektrolyten nachzufüllen. Auch kann eine mehrfarbige Leuchtdiode verwendet werden, die beispielsweise kontinuierlich ein grünes Leuchtsignal aussendet, solange der Füllstand unbedenklich ist, und ein rot blinkendes Leuchtsignal ausgibt, wenn Elektrolyt nachgefüllt werden muß. Die Frequenz, mit der die Leuchtdiode in diesem Fall blinkt, kann beispielsweise mit einer zunehmenden Verringerung des Füllstandes zunehmen, um auf diese Weise die Dringlichkeit des Nachfüllens anzuzeigen. Werden hingegen zwei Leuchtdioden verwendet, so leuchten diese bevorzugt in verschiedenen Farben, beispielsweise grün und rot. Leuchtet die grüne Anzeige, so bestehen hinsichtlich des Füllstandes des Elektrolyten keine Bedenken. Leuchtet hingegen die rote Lampe auf, muss der Elektrolyt nachgefüllt werden. Auch hier können Leuchtdioden verwendet werden, die Blinksignale ausgeben, da Blinksignale, insbesondere bei Tageslicht, besser vom Wartungspersonal wahrgenommen werden.

Vorzugsweise weist die Signalausgabeeinrichtung des erfindungsgemäßen Niveauwächtersystems zumindest ein Befestigungsmittel auf, mit dem die Signalausgabeeinrichtung an einem Gegenstand befestigbar ist. Vorteilhaft handelt es sich bei dem Befestigungsmittel um zumindest ein Klemmelement, mit dem die Signalausgabeeinrichtung an einem Kabel befestigbar ist, beispielsweise an einem zum Akkumulator führenden Ladekabel, das mit einem weiteren Ladekabel einer Ladeeinrichtung verbindbar ist.

Gemäß einer weiteren bevorzugten Ausführungsform des erfindungsgemäßen Niveauwächterssystems ist die Signalausgabeeinrichtung an einem Stecker eines zu einem Akkumulator führenden Ladekabels angeordnet oder in diesen integriert, der zur Aufnahme eines entsprechenden Gegensteckers eines zu einer Ladeeinrichtung führenden Aufladekabels dient. Auf diese Weise kann das Personal, während es den Stecker des zur Ladeeinrichtung führenden Aufladekabels in den Stecker des zum Akkumulator führenden Ladekabels einführt, gleichzeitig den Füllstand des Elektrolyten ablesen und kontrollieren.

Nachfolgend wird die vorliegende Erfindung unter Bezugnahme auf die Zeichnung genauer beschrieben. Darin ist:
- Fig.1: eine Draufsicht einer Ausführungsform einer Signalausgabeeinrichtung des erfindungsgemäßen Niveauwächtersystems;
- Fig.2: eine seitliche Querschnittansicht der in Fig.1 dargestellten Signalausgabeeinrichtung entlang der Linie II-II in Fig.1;
- Fig.3: eine seitliche Querschnittansicht der in den Figu. 1 und 2 dargestellten Signalausgabeeinrichtung entlang der Linie III-III in Fig.1 und
- Fig.4: eine perspektivische Ansicht der in den Figu. 1 bis 3 dargestellten Signalausgabeeinrichtung, die zwischen zwei Ladekabeln eingeordnet ist, die zu einem Akkumulator führen.

Gleiche Bezugsziffern beziehen sich nachfolgend auf gleiche Bauteile.

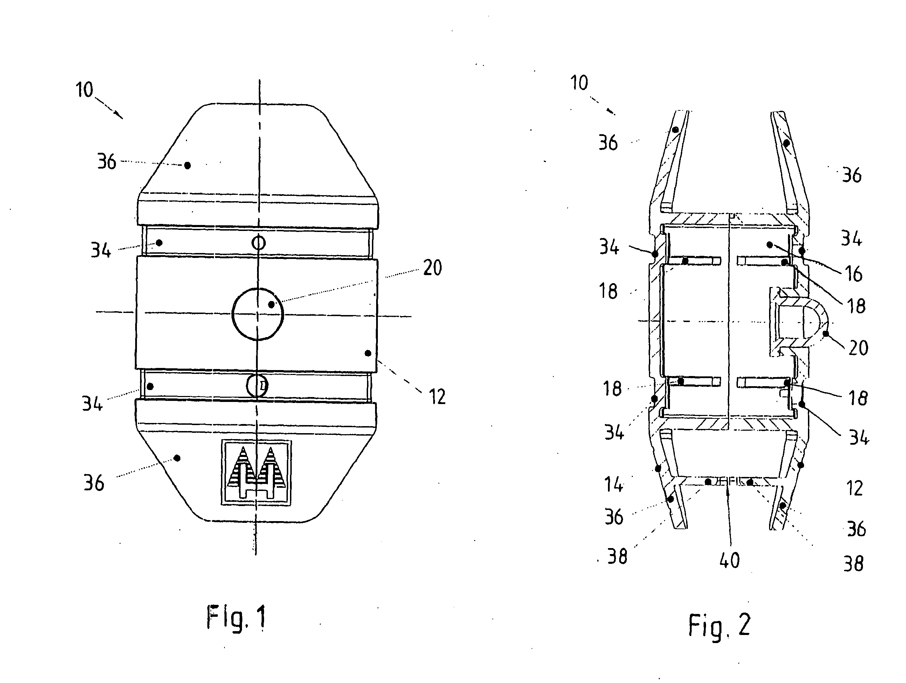

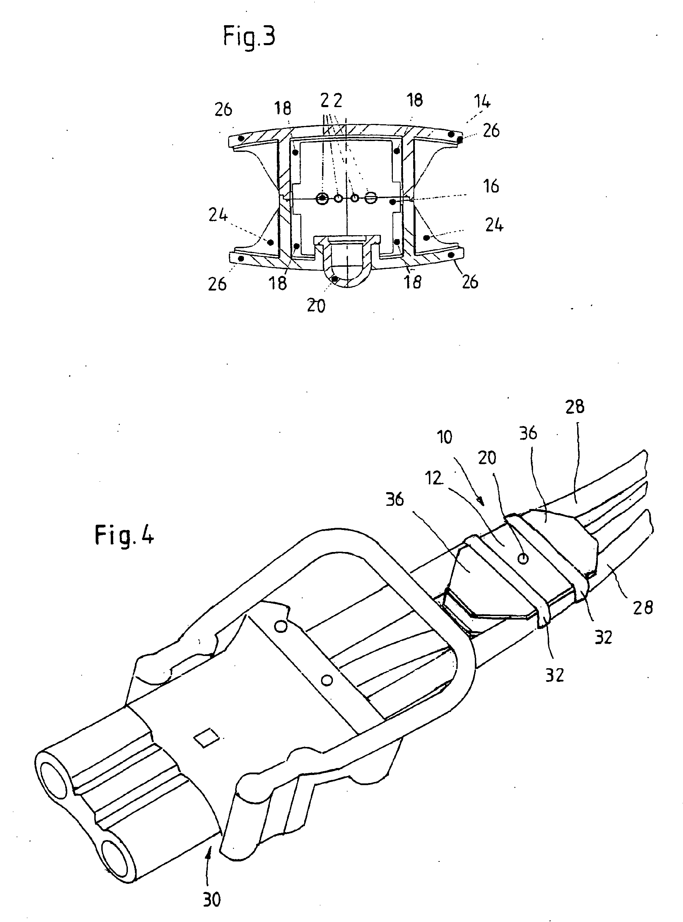

Die Figuren 1 bis 4 zeigen eine beispielhafte Ausführungsform einer Signalausgabeeinrichtung 10 des erfindungsgemäßen Niveauwächtersystems. Wie in den Figuren 2 und 3 gezeigt ist, umfasst die Signalausgabeeinrichtung 10 ein aus einer Oberschale 12 und einer Unterschale 14 gebildetes Gehäuse. Die Oberschale 12 und die Unterschale 14 sind mit geeigneten Mitteln vorzugsweise lösbar aneinander befestigt, so dass das Gehäuse nachträglich geöffnet werden kann, um beispielsweise entsprechende Reperaturarbeiten durchzuführen. Das Gehäuse kann natürlich auch einteilig ausgebildet sein. Dies kann beispielsweise dann vorteilhaft sein, wenn die Signalausgabeeinrichtung 10 einer großen Schwingungsbelastung ausgesetzt ist. Die Oberschale 12 und die Unterschale 14 bilden gemeinsam einen Hohlraum 16 aus, der bevorzugt gegenüber der Umgebung staubdicht und flüssigkeitsdicht verschlossen ist. In den Hohlraum 16 erstrecken sich sowohl von der Oberschale 12 als auch von der Unterschale 14 Halteelemente 18, zwischen denen eine nicht dargestellte Platine aufnehmbar ist, auf der elektronische Komponenten der Signalausgabeeinrichtung 10 angeordnet sind. In der Oberschale 12 ist eine Öffnung ausgebildet, in der eine Signalausgabeeinrichtung in Form einer Leuchtdiode 20 lösbar gehalten ist, um diese im Falle eines Defektes austauschen zu können. Die Leuchtdiode 20 ist unter Verwendung geeigneter Mittel mit der nicht dargestellten Platine wirkverbunden. Wie in Figur 3 gezeigt ist, sind an einer Gehäuseseite Kabelanschlussöffnungen 22 vorgesehen, durch die Kabel geführt werden, die zur Stromversorgung der Signalausgabeeinrichtung 10 sowie zur Signalübertragung von einem nicht dargestellten Niveauwächter des erfindungsgemäßen Niveauwächtersystems zur Signalausgabeeinrichtung 10 dienen.

An dem Gehäuse sind ferner an zwei einander gegenüberliegenden Gehäuseseiten Klemmelemente 24 einteilig mit dem Gehäuse ausgebildet, und zwar in Form von elastischen Klemmarmen 26, die von der Oberschale 12 sowie von der Unterschale 14 nach aussen vorstehen und jeweils in Richtung aufeinander zu geneigt sind. Zwischen diesen Klemmarmen 26 können Kabel 28 aufgenommen werden, wie es in Figur 4 gezeigt ist. Bei diesen Kabeln 28 kann es sich beispielsweise um Ladekabel handeln, die in der einen Richtung zu einem nicht dargestellten Akkumulator führen und in der anderen Richtung in einemnicht dargestellten Stecker 30 münden, der zur Aufnahme eines zu einer Ladeeinrichtung führenden Ladekabels dient.bzw. zur Aufnahme in einem entsprechenden Anschluß der Ladeeinrichtung selbst dient.

Um die Signalausgabeeinrichtung 10 sicher zwischen den Kabeln 28 zu halten, sind kabelbinderartige Befestigungselemente 32 um die Signalausgabeeinrichtung 10 und die Kabel 28 gelegt, die in entsprechende Aufnahmenuten 34 greifen, die an der Außenseite der Oberschale 12 und Unterschale 14 ausgebildet sind, wie es in den Fign. 1 und 2 zu erkennen ist.

Ferner sind an dem Gehäuse der Signalausgabeeinrichtung 10 an gegenüberliegenden Gehäuseseiten jeweils zwei voneinander beabstandete, sich auswärts erstreckende und aufeinander zu geneigte Gehäuseabschnitte 36 ausgebildet. Von zwei dieser Gehäuseabschnitte 36, die an derjenigen Gehäuseseite angeordnet sind, an der sich auch die Kabelanschlußöffnungen 22 befinden, erstreckt sich im wesentlichen quer zu dem entsprechenden Gehäuseabschnitt 36 jeweils ein stegförmiger Gehäuseabschnitt 38, wobei die beiden stegförmigen Gehäuseabschnitte 38 einander gegenüberliegen und sich derart aufeinander zu erstrecken, so daß zwischen diesen ein Spalt 40 ausgebildet ist. Die Gehäuseabschnitte 36 bilden zusammen mit den stegförmigen Gehäuseabschnitten 38 eine Zugentlastung für die an die Signalausgabeeinrichtung 10 angeschlossenen Kabel, die in die entsprechenden Kabelanschlußöffnungen 22 eingesteckt sind.

Der in den Figuren nicht dargestellte Niveauwächter des erfindungsgemäßen Niveauwächtersystems erfasst den Elektrolytfüllstand eines ebenfalls nicht gezeigten Akkumulators und übermittelt den Füllstand des Elektrolyten repräsentierende Signale an die Signalausgabeeinrichtung 10. Die Übermittlung kann wahlweise über datenübertragende Kabel oder über eine Funkverbindung erfolgen. Im letzteren Fall umfasst der Niveauwächter eine Signalausgabeeinrichtung und die Signalausgabeeinrichtung 10 eine Signalempfangseinrichtung. Zeigen die übermittelten Füllstandsignale an, dass noch ausreichend Elektrolyt in dem Akkumulator vorhanden ist, so leuchtet die Leuchtdiode 20 kontinuierlich. Ist dies hingegen nicht der Fall, so beginnt die Leuchtdiode zu blinken, um anzuzeigen, dass der Elektrolyt nachgefüllt werden muss. Leuchtet die Leuchtdiode 20 gar nicht, so lässt dies auf einen Defekt der Leuchtdiode schließen, woraufhin diese ausgetauscht werden muss, um einen sicheren Betrieb des Akkumulators zu gewährleisten.

Es sollte klar sein, dass das zuvor beschriebene Ausführungsbeispiel nicht einschränkend ist. Vielmehr sind Modifikationen und Änderungen möglich, ohne den Schutzbereich der vorliegenden Erfindung zu verlassen, der durch die beiliegenden Ansprüche definiert ist.

### Bezugszeichenliste

- 10: Signalausgabeeinrichtung
- 12: Oberschale
- 14: Unterschale
- 16: Hohlraum
- 18: Halteelemente
- 20: Leuchtdiode
- 22: Kabelanschlußöffnung
- 24: Klemmelemente
- 26: Klemmarme
- 28: Kabel
- 30: Stecker
- 32: Befestigungselemente
- 34: Aufnahmenuten
- 36: Gehäuseabschnitte
- 38: stegförmiger Gehäuseabschnitt
- 40: Spalt

## Patentansprüche

1. Niveauwächtersystem zur Überwachung eines Füllstandes eines Elektrolyten eines Akkumulators, das einen Niveauwächter und eine in einem separaten Gehäuse angeordnete Signalausgabeeinrichtung (10) aufweist, die vom Niveauwächter den Füllstand des Elektrolyten repräsentierende Signale empfängt und zumindest ein entsprechendes Füllstandssignal ausgibt,
**dadurch gekennzeichnet,**
**dass** an dem Gehäuse an zwei einander gegenüberliegenden Gehäuseseiten Klemmelemente (24) einteilig mit dem Gehäuse in Form von elastischen Klemmarmen (26) ausgebildet sind, mittels welcher die Signalausgabeeinrichtung (10) an einem Kabel (28) befestigbar ist, bei welchem Kabel (28) es sich um das Ladekabel für den Akkumulator handelt.

2. Niveauwächtersystem nach Anspruch 1, **dadurch gekennzeichnet, dass** das Gehäuse aus einer Oberschale (12) und einer Unterschale (14) gebildet ist, wobei an der Außenseite der Oberschale (12) und der Unterschale (14) Aufnahmenuten (34) ausgebildet sind.

3. Niveauwächtersystem nach Anspruch 1, **dadurch gekennzeichnet, dass** an einer Gehäuseseite Kabelanschlussöffnungen (22) vorgesehen sind.

4. Niveauwächtersystem nach Anspruch 1, **dadurch gekennzeichnet, dass** an dem Gehäuse an den gegenüberliegenden Gehäuseseiten jeweils zwei voneinander beabstandete, sich aufwärts erstreckende und aufeinander zugeneigte Gehäuseabschnitte (36) ausgebildet sind.

5. Niveauwächtersystem nach Anspruch 4, **dadurch gekennzeichnet, dass** sich von zwei Gehäuseabschnitten (36) quer hierzu jeweils ein stegförmiger Gehäuseabschnitt (38) erstreckt, wobei die stegförmigen Gehäuseabschnitte (38) einander gegenüberliegen und sich derart aufeinander zu erstrecken, dass zwischen diesen ein Spalt (40) ausgebildet ist.

6. Niveauwächtersystem nach Anspruch 1, bei dem zwischen dem Niveauwächter und der Signalausgabeeinrichtung (10) eine Kabelverbindung zur Signalübertragung vorgesehen ist.

7. Niveauwächtersystem nach Anspruch 1, bei dem zwischen dem Niveauwächter und der Signalausgabeeinrichtung (10) eine Funkverbindung zur Signalübertragung vorgesehen ist.

## Claims

1. Level monitoring system for monitoring a fill level of an electrolyte of a rechargeable battery, which level monitoring system has a level monitor and a signal outputting device (10) arranged in a separate housing, which signal outputting device receives the signals representing the fill level of the electrolyte from the level monitor and outputs at least one corresponding fill level signal,
**characterised**
**in that** clamping elements (24) are constructed on the housing on two mutually opposite housing sides in one piece with the housing in the form of elastic clamping arms (26), by means of which clamping elements the signal outputting device (10) can be fixed to a cable (28), which cable (28) is the charging cable for the rechargeable battery.

2. Level monitoring system according to Claim 1,
**characterised in that** the housing is formed from an upper shell (12) and a lower shell (14), wherein accommodation grooves (34) are formed on the outside of the upper shell (12) and the lower shell (14).

3. Level monitoring system according to Claim 1,
**characterised in that** cable connection openings (22) are provided on one housing side.

4. Level monitoring system according to Claim 1,
**characterised in that** two housing sections (36) are constructed on the housing at the opposite housing sides in each case, which housing sections are distanced from one another, extend upwards and are inclined towards one another.

5. Level monitoring system according to Claim 4,
**characterised in that** one web-like housing section (38) extends in each case from two housing sections (36), transversely thereto, wherein the web-like housing sections (38) lie opposite one another and extend towards one another in such a manner that a gap (40) is formed between the said housing sections.

6. Level monitoring system according to Claim 1, in which a cable connection is provided for signal transmission between the level monitor and the signal outputting device (10).

7. Level monitoring system according to Claim 1, in which a radio connection is provided for signal transmission between the level monitor and the signal outputting device (10).

## Revendications

1. Système de surveillance de niveau pour surveiller un état de remplissage d'un électrolyte d'un accumulateur, qui présente un contrôleur de niveau et un dispositif d'émission de signaux (10) disposé dans un logement séparé, qui reçoit en provenance du contrôleur de niveau les signaux représentant l'état de emplissage de l'électrolyte et émet au moins un signal d'état de remplissage correspondant,
**caractérisé en ce que**
sur le logement sur deux côtés de logement se faisant face l'un l'autre, des éléments de serrage (24) sont réalisés en un seul tenant avec le logement sous forme de bras de serrage (26) élastiques, au moyen desquels le dispositif d'émission de signaux (10) peut être fixé sur un câble (28), lequel câble (28) consistant en le câble de charge de l'accumulateur.

2. Système de surveillance de niveau selon la revendication 1, **caractérisé en ce que** le logement est formé d'une coque supérieure (12) et d'une coque inférieure (14), dans lequel sur le côté extérieur de la coque supérieure (12) et de la coque inférieure (14) des rainures de réception (34) sont réalisées.

3. Système de surveillance de niveau selon la revendication 1, **caractérisé en ce que** sur un côté du logement des ouvertures de raccordement de câble (22) sont prévues.

4. Système de surveillance de niveau selon la revendication 1, **caractérisé en ce que** sur le logement sur les côtés de logement se faisant face, deux sections de logement (36) respectivement espacées l'une de l'autre, s'étendant vers le haut et tournées l'une sur l'autre sont réalisées.

5. Système de surveillance de niveau selon la revendication 4, **caractérisé en ce que** à partir des deux sections de logement (36) une section de logement (38) en forme de gradin s'étend respectivement transversalement à celles-ci, dans lequel les sections de logement en forme de gradin (38) s'étendent en se faisant face l'une l'autre et l'une sur l'autre de telle sorte qu'un interstice (40) soit réalisé entre celles-ci.

6. Système de surveillance de niveau selon la revendication 1, dans lequel entre le contrôleur de niveau et le dispositif d'émission de signaux (10) une liaison par câble pour la transmission de signaux est prévue.

7. Système de surveillance de niveau selon la revendication 1, dans lequel entre le contrôleur de niveau et le dispositif d'émission de signaux (10) une liaison radio pour la transmission de signaux est prévue.
